# EUROPEAN PATENT APPLICATION

(11) **EP 0 603 806 A1**
(43) Date of publication of application: **29.06.1994**
(21) Application number: 93120551.2
(22) Date of filing: 20.12.1993
(51) Int. Cl.: G06F 15/62

(54) **Apparatus and method for reproducing an image**

(30) Priority: 25.12.1992 JP 359490/92
(71) Applicant: Dainippon Screen Mfg. Co., Ltd., Kamikyo-ku Kyoto 602 (JP)
(72) Inventor: Shibazaki,Hiroshi c/o Dainippon Screen Mfg.Co.Ltd., Horikawa-dori,Kamikyo-ku,Kyoto (JP)
(74) Representative: Goddar, Heinz J., Dr.

(57) **Abstract**

The invention provides an improved reproduction image recording apparatus which utilizes a page description language and separates a black overprint area from a residual linework portion to save time required for raster image processing. In the reproduction image recording apparatus of the invention, a front end processor reads a mechanical as linework data using a plane scanner and displays an image corresponding to the linework data on a CRT display. The front end processor then generates layout data showing an image segment other than a black overprint area and black overprint data representing the black overprint area. A raster image processor or RIP converts the layout data to raster data and combines the raster data with the black overprint data to compose page image data. A recorder unit records a resultant image corresponding to the page image data on a recording medium.

## Description

### BACKGROUND OF THE INVENTION

### Field of the Invention

The present invention relates to a reproduction image recording apparatus and method for reproduction of a mechanical.

### Description of the Related Art

Desktop publishing (DTP) systems generally have been developed for realizing simple and fast editing and recording of an image including at least one of a plurality of characters, lineworks, and pictures. The DTP system generally includes a personal computer or a work station as a front end processor.

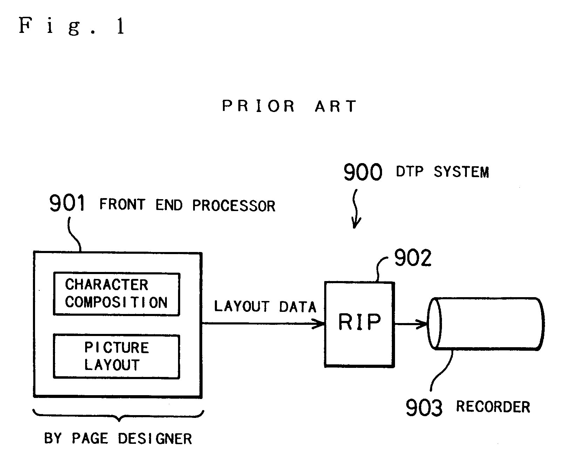

Fig. 1 is a block diagram showing a conventional DTP system 900, which includes a front end processor 901, a raster image processor (RIP) 902, and a recorder 903. After an editing process, including character composition and picture layout based on a mechanical, by a page designer, the front end processor 901 composes a page image according to the editing process and outputs the page image as layout data expressed in a page description language (generally referred to as PDL; for example, Postscript, Interpress, or DDL) to the RIP 902. The RIP 902 receives the layout data to generate bit map or run length image data and outputs the image data to the recorder 903. The layout data output from the front end processor 901 includes character data, keyline data, picture positioning data, and picture data.

Even when a mechanical is supplied as a completed original (original including all information required for preparing final printing), the conventional DTP system described above requires a lot of time and labor for editing a page image based on the mechanical. In the conventional DTP system, the operator checks the mechanical, which may be displayed on a monitor screen, and manually edits the page image using the front end processor. Even if an original is a completed original, its page image has to be edited as if it was an ordinary original.

### SUMMARY OF THE INVENTION

An object of the invention is to simplify editing of a page image based on a mechanical and improve efficiency of a reproduction process.

The present invention is directed to a reproduction image recording method and apparatus including a linework data generator for scanning a monochrome image, which includes an outline of an image part and a black area, to generate first linework data representing the monochrome image; a display controller for controlling a display to display the monochrome image as a function of the first linework data; a black area data generator for extracting from the first linework data second linework data representing the black area; an outline generator for determining a desirable outline of the image part corresponding to the outline displayed on the display to generate outline data representing the desirable outline; a layout generator for composing a page image having the image part defined by the desirable outline and generating layout data representing the page image; and a combined image data generator for combining the layout data with the second linework data to produce combined image data representing a combined image which includes the black area and the image part.

In a preferred embodiment, the outline generator includes a point specifier for specifying a plurality of points in the proximity of the outline displayed on the display and a point connector for connecting the plurality of points with one another to produce the desirable outline.

Moreover, the layout generator includes a color processor for allocating a predetermined color to the image part defined by the desirable outline.

Preferably, the layout generator further includes a trapping processor for creating an overlapping area of a predetermined width on a boundary between two image parts each defined by the desirable line, the overlapping area being used to prevent an image omission caused by a registration error in printing.

In another embodiment the black area data generator includes a linework eliminator for erasing part of the first linework data representing a residual portion of the monochrome image other than the black area.

According to still another aspect of the present invention, the layout generator further includes a page description program output for outputting the layout data as a page description program expressed by a page description language.

The combined image data generator further includes a layout data expander for converting the layout data to first bit map image data. Preferably, the combined image data generator further includes a black area data expander for converting the second linework data to second bit map image data.

Moreover, the combined image data generator further includes a controller for, when the first bit map image data output from the layout data expander corresponds to a black printing plate, allowing combination of the first bit map image data with the second bit map image data converted by the black area data expander and for interfering with the combination of the first bit map image data and second bit map image data when the first bit map image data corresponds to a printing plate other than the black printing plate.

According to yet another aspect of the present invention, the apparatus includes a work station which comprises a central processing unit and associated software which embody the layout area data generator and the black area data generator.

In another embodiment, the apparatus further includes a recorder for recording the combined image on a recording medium as a function of the combined image data.

The present invention is also directed to a method of recording a reproduction image, the method includes the steps of: (a) scanning a monochrome image, which includes an outline of an image part and a black area, to generate first linework data representing the monochrome image; (b) displaying the monochrome image as a function of the first linework data; (c) extracting second linework data representing the black area from the first linework data; (d) determining a desirable outline of the image part corresponding to the outline displayed in the step (b) to generate outline data representing the desirable outline; (e) composing a page image having the image part defined by the desirable outline and generating layout data representing the page image; and (f) combining the layout data with the second linework data to produce combined image data representing a combined image including the black area and the image part.

These and other objects, features, aspects and advantages of the present invention will become more apparent from the following detailed description of the present invention when taken in conjunction with the accompanying drawings.

Other features and advantages of the present invention will become apparent from the following description of the invention which refers to the accompanying drawings.

### BRIEF DESCRIPTION OF THE DRAWINGS

Fig. 1 is a block diagram showing a conventional DTP system;
Fig. 2 is a block diagram showing an essential structure of a reproduction image recording apparatus of the present invention;
Fig. 3 shows a typical example of a mechanical M to be reproduced by the present invention;
Figs. 4A through 4D show a process of generating image data in the reproduction image recording apparatus;
Fig. 5 is a flowchart showing a data generating routine executed by a CPU of a front end processor;
Fig. 6 is a flowchart showing details of step S200 of Fig. 5;
Fig. 7 is a flowchart showing details of step S300 of Fig. 5;
Figs. 8A through 8C respectively show specification of a plurality of points for defining an area to be filled with a certain color;
Fig. 9 is a flowchart showing details of step S400 of Fig. 5;
Fig. 10 shows an example of trapping process;
Fig. 11 shows an image displayed on a CRT display after execution of steps S300 and S400 of Fig. 5;
Fig. 12 shows a typical structure of layout data;
Fig. 13 is a flowchart showing details of step S600 of Fig. 5;
Fig. 14 shows an image including only a black overprint area;
Fig. 15 schematically shows image data consisting of run length data;
Fig. 16 shows a structure of run length data; and
Fig. 17 shows a resultant image recorded by a recorder unit 7.

### DESCRIPTION OF THE PREFERRED EMBODIMENT

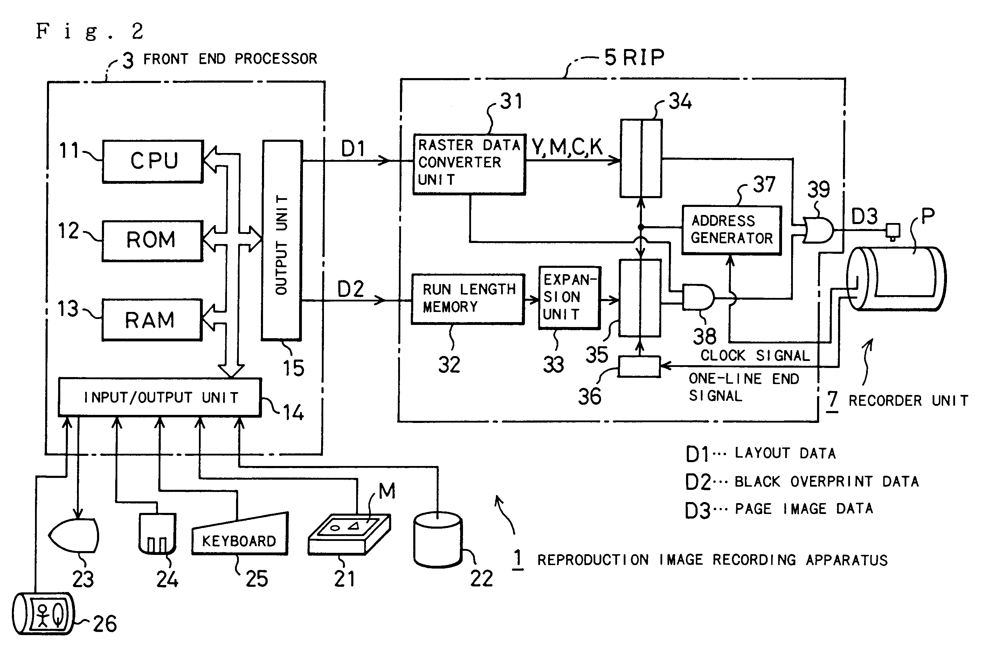

Fig. 2 is a block diagram showing an essential structure of a reproduction image recording apparatus 1 embodying the invention.

The reproduction image recording apparatus 1 of the embodiment includes a front end processor 3 for generating image data representing an original image, a raster image processor 5 (hereinafter referred to as RIP) for converting the image data output from the front end processor 3 to raster data (bit-map image data), and a recorder unit 7 for recording a final image corresponding to the raster data onto a recording medium P.

The front end processor 3 constructed as a general-purpose work station includes a CPU (central processing unit) 11, a ROM (read only memory) 12, a RAM (random access memory) 13, and an input/output unit 14 and an output unit 15 for receiving and transferring data from and to external devices. The front end processor 3 is connected with a plane scanner 21 for scanning an image drawn on a mechanical M to compose binary image data or linework data representing the image, a picture input scanner 26 for scanning a photographic or picture image to compose picture data, an external memory disk 22 for storing the linework data and picture data generated by the scanners 21 and 26, a CRT (cathode ray tube) display 23 for displaying an image corresponding to the linework data or picture data, a mouse 24 for positioning and specifying the image displayed on the CRT display 23, and a keyboard 25 for input operation.

In the front end processor 3, the plane scanner 21 reads the image on the mechanical M as linework data, which is subsequently displayed on the CRT display 23. The operator checks the image on the CRT display 23 and gives instructions to generate data required for composing a page image having a desirable layout. The page image includes a first image segment representing a black overprint area or black solid area and a second image segment representing a residual area other than the black overprint area. The first image segment is composed as binary run length data or linework data D2 whereas the second image segment is generated as layout data D1. A typical method of generating the layout data D1 and the linework data D2 will be described later.

The RIP 5 converts the layout data D1 generated by the front end processor 3 to raster data, combines the raster data with the linework data D2 of the black overprint area (hereinafter referred to as black overprint data) also generated by the front end processor 3 to compose page image data D3, and outputs the page image data D3 to the recorder unit 7. The RIP 5 includes a raster data converter unit 31, a run length memory 32, an expansion unit 33, a first line memory 34, a second line memory 35, a selector 36, an address generator 37, an AND gate 38, and an OR gate 39.

The RIP 5 works in the following manner. The raster data converter unit 31 converts the layout data D1 transferred from the front end processor 3 to bit map raster data and transfers the bit map data of each page for color printing plates Y (yellow), M (magenta), C (cyan), and K (black) successively by every line to the first line memory 34. The black overprint data transferred from the front end processor 3 are first stored in the run length memory 32 and then expanded to bit map data by the expansion unit 33. The expansion unit 33 transfers the bit map data of each page successively by every line to the second line memory 35. The first line memory 34 and the second line memory 35 respectively have a two-line data capacity allowing simultaneous data input and output.

When the address generator 37 sends an address signal to the first line memory 34 and the second line memory 35 in response to a clock signal output from the recorder unit 7, bit map data are read out successively by every pixel from the first line memory 34 and the second line memory 35. The recorder unit 7 outputs a one-line end signal generating a pulse every time when data for one line is written in. The selector 36 receives the one-line end signal and selects one of the two lines in the first line memory 34 and the second line memory 35.

The raster data converter unit 31 sends a K signal to the AND gate 38 every time when data for the K printing plate is transferred to the first line memory 34. The AND gate 38 receives the K signal as one input and the black linework data output from the second line memory 35 as the other input, and transmits the black linework data according to the K signal. The first line memory 34 outputs data of a color separated image for each of the Y, M, C, and K printing plates by every line, and the AND gate 38 transmits the black linework data only when data representing the color separated image for the K printing plate is output from the first line memory 34.

The OR gate 39 combines the bit map data from the first line memory 34 with the black linework data from the AND gate 38 to compose the page image data D3 and transfers the page image data D3 to a write head 7a of the recorder unit 7. The recorder unit 7 reconstructs and records a desirable image on the recording medium P according to the page image data D3.

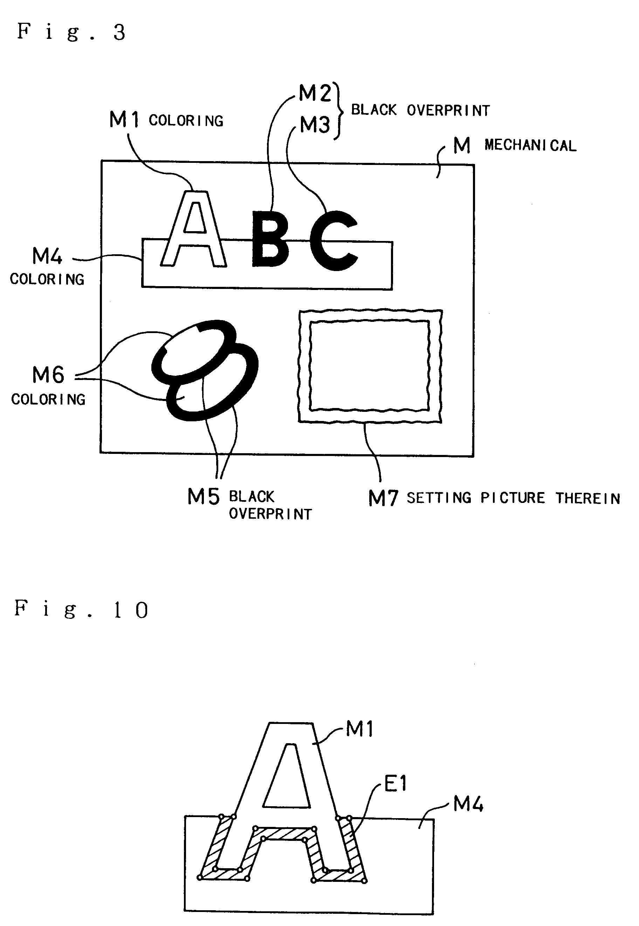

Generation of the image data with the reproduction image recording apparatus 1 is described in detail. A mechanical M typically includes one or a

plurality of characters, lineworks, picture frames, and register marks drawn in black ink on a white sheet as shown in Fig. 3. In the example of Fig. 3, the mechanical M includes first through seventh image parts M1 through M7 defined as:
M1: An outlined letter 'A';
M2: A solid letter 'B';
M3: A solid letter 'C';
M4: A rectangle laid under lower portions of the first through third image parts M1, M2, and M3;
M5: An illustration representing two rings;
M6: A closed area defined by the fifth image part M5; and
M7: A frame drawn by rough line or keyline.

Generally, a semitransparent instruction sheet is laid on top of such a mechanical M, which gives instructions of required processes for the first through the seventh image parts as follows:
(1) Fill the outlined letter 'A' of the first image part M1 with a predetermined first color;
(2) Lay black ink onto the solid letters 'B' and 'C' of the second and the third image parts M2 and M3;
(3) Fill the rectangle image part M4 laid under the lower portions of the letters 'A', 'B', and 'C' with a predetermined second color;
(4) Lay black ink onto the illustration of the fifth image part M5;
(5) Fill the closed area of the sixth image part M6 surrounded by the fifth image part M5 with a predetermined third color; and
(6) Fit a picture image in the frame of the seventh image part M7.

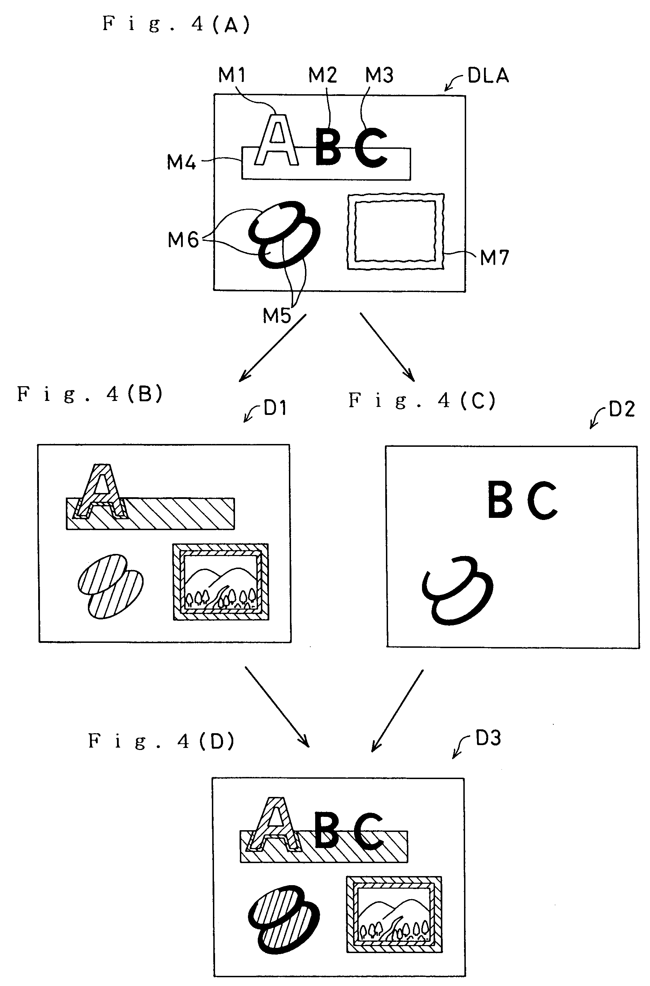

The plane scanner 21 scans the image on the mechanical M to obtain a binary linework image shown in Fig. 4A. The front end processor 3 generates a first image except a black overprint area (image corresponding to the layout data D1) shown in Fig. 4B and a second image representing a black overprint area (image corresponding to the black overprint data D2) shown in Fig. 4C. The RIP 5 then combines the layout data D1 with the black overprint data D2 to compose a resultant combined image (image corresponding to the page image data D3) shown in Fig. 4D.

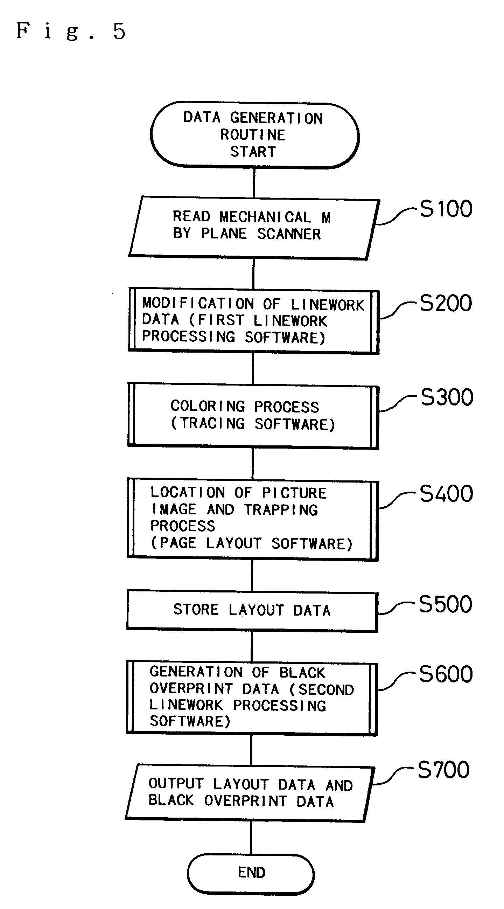

Operation of the front end processor 3 for generating the layout data D1 and the black overprint data D2 is now described in detail. The layout data D1 representing an image segment other than the black overprint area and the black overprint data D2 representing the black overprint area are generated according to a data generating routine executed by the CPU 11 of the front end processor 3 as shown in the flowchart of Fig. 5.

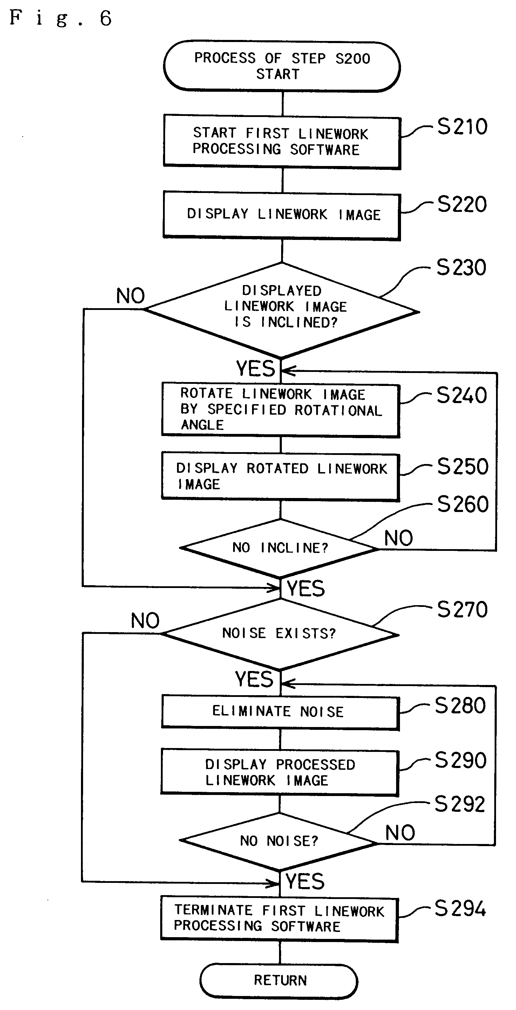

When the program enters the routine, the CPU 11 actuates the plane scanner 21 to read an image drawn on the mechanical M as binary linework data DLA at step S100. In the embodiment, the binary linework data DLA corresponds to the binary linework image of Fig. 4A. At step S200, the CPU 11 modifies the input linework data DLA as shown in detail in the flowchart of Fig. 6.

At step S210, the CPU 11 starts a linework processing software for a variety of known processes of a linework image executed at subsequent steps. After showing a linework image corresponding to the linework data DLA on the CRT display 23 at step S220, the CPU 11 reads an instruction from the operator and determines whether the displayed linework image is inclined at step S230. When the operator gives an instruction to compensate for an incline of the linework image, the CPU 11 determines that the linework image is inclined. When the operator gives another instruction, on the other hand, the CPU 11 determines that the linework image is arranged and oriented adequately.

When the linework image is determined to be inclined at step S230, the program goes to step S240 at which the CPU 11 rotates the linework image by a certain rotational angle specified by the operator to compensate for the incline. After showing the rotated linework image on the CRT display 23 at step S250, the CPU 11 again reads an instruction from the operator to determine whether the rotated linework image is arranged at a correct angle at step S260.

When the CPU 11 determines that the angle of the linework image is still inadequate at step S260, the program returns to step S240 to repeat processes of steps S240 through S260. When the linework image or rotated linework image is determined to be adequately arranged and oriented at step S230 or S260, the program goes to step S270 at which the CPU 11 reads an instruction from the operator and determines whether the linework image displayed on the CRT display 23 has a certain noise, for example, a pin hole.

When a pin hole or another noise is found at step S270, the program goes to step S280 at which the CPU 11 eliminates the noise. After showing the processed linework image on the CRT display 23 at step S290, the CPU 11 reads an instruction from the operator to determine whether the processed linework image has any additional pin holes or noise at step S292. If any noise is still found in the processed linework image, the program returns to step S280 to repeat the processes of steps S280 through S292. When no pin hole or noise is found in the linework image or processed linework image at step S270 or S292, the program proceeds to step S294 at which the CPU 11 terminates the linework processing software, and then exits from the routine of Fig. 6 to conclude the process at step S200 of Fig. 5.

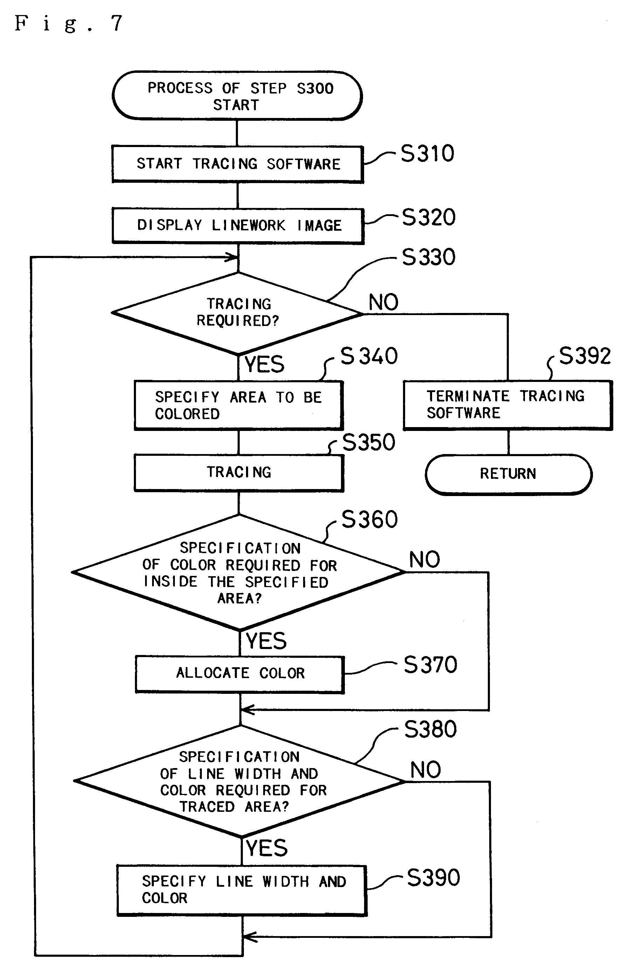

After completion of step S200, the program goes to step S300 at which the CPU 11 allocates a predetermined color or colors to the modified linework data DLA as shown in the flowchart of Fig. 7.

At step S310, the CPU 11 starts a tracing software for executing a known tracing process. After showing a linework image corresponding to the linework data DLA on the CRT display 23 at step S320, the CPU 11 reads an instruction from the operator and determines whether the tracing process is required in accordance with the displayed linework image at step S330. The tracing process here includes a step of defining each area to be filled with a certain color (except black overprint areas) by boundary lines. When the operator gives an instruction of executing the coloring process for the linework image of the mechanical M displayed on the CRT display 23, the CPU 11 determines that the tracing is required. When the operator gives another instruction, on the other hand, the CPU 11 determines that no tracing process is required.

When the tracing process is required at step S330, the program goes to step S340 at which the CPU 11 specifies a target linework for the coloring process in the linework image displayed on the CRT display 23 in response to instructions from the operator. The operator checks the linework image displayed on the CRT display 23 and specifies a plurality of points in the proximity of an outline of the image part displayed on the CRT display 23 through operation of the mouse 24. The CPU 11 then, at step S340, reads the position of the plurality of points specified by the operator. After execution of step S340, the program proceeds to step S350 at which the CPU 11 connects the plurality of points with one another to trace the target linework.

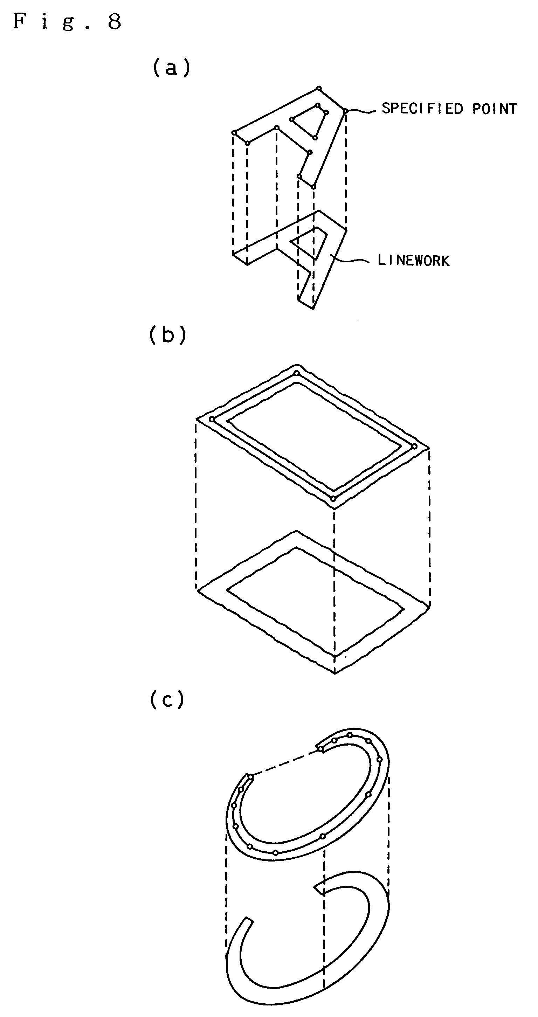

When the target linework is a letter 'A' as shown in an example of Fig. 8A, the operator specifies a plurality of points (shown by the open circles) positioned at every corner of the linework. When the target linework is a rough keyline, the operator specifies a starting point and a terminal point of the keyline. When the rough keyline defines a rectangle box as shown in Fig. 8B, specified points are positioned at four corners of the box. When the target linework image includes an illustration having a curved portion as shown in Fig. 8C, a plurality of points are specified along the curved portion. The plurality of points thus specified are connected with one another by straight or curved lines at step S350.

The program then proceeds to step S360 at which the CPU 11 reads an instruction from the operator and determines whether the inside of the target linework traced at step S350 is to be painted with a color. The operator first determines whether color specification is required to paint the inside of the traced linework by referring to an original and executes a predetermined operation for the color specification. The CPU 11 then determines necessity or non-necessity of the coloring process according to the predetermined operation. When the color specification is required at step S360, the program goes to step S370 at which the CPU 11 specifies a certain color for filling the inside of the target linework.

When no color specification is required at step S360 or after the process of step S370 is completed, the program goes to step S380 at which the CPU 11 receives an instruction from the operator to determine whether a line width and a color are to be specified for the traced linework. When the answer is YES at step S380, the program proceeds to step S390 at which the CPU 11 specifies the width of the traced linework and allocates a certain color to the linework. When specification of the line width or color is not required at step S380 or after the process of step S390 is completed, the program returns to step S330 to repeat the subsequent processing.

When no tracing is required at step S330, the program goes to step S392 at which the CPU 11 terminates the tracing software, and then exits from the routine of Fig. 7 to complete the process at step S300 of Fig. 5.

In the example of Fig. 4A where the linework data DLA of the mechanical M includes the first through seventh image parts M1 through M7, the letter 'A' of the first image part M1, the rectangle of the fourth image part M4, the closed area of the sixth image part M6, and the frame of the seventh image part M7 are traced at step S350. After certain colors are respectively allocated to fill the inside of the image parts M1, M4, and M6 at step S370, a line width and a color are specified for the seventh image part M7 at step S390.

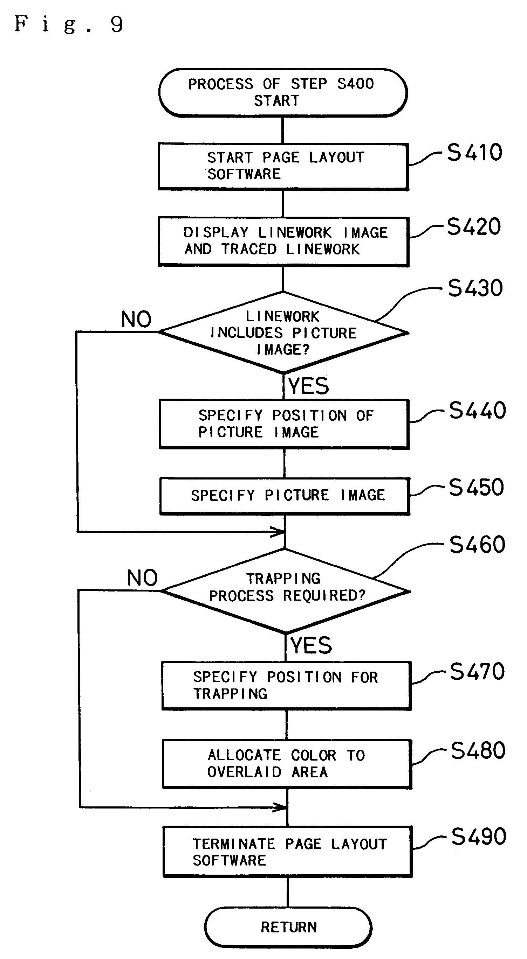

After completion of step S300 in the flowchart of Fig. 5, the program goes to step S400 at which the CPU 11 locates a picture image and executes a trapping process as shown in detail in the flowchart of Fig. 9.

The CPU 11 starts a page layout software at step S410 and shows a linework image corresponding to the linework data DLA, as well as, a traced image corresponding to trace data generated through the process of step S300 on the CRT display 23 at step S420. The program then proceeds to step S430 at which the CPU 11 reads an instruction from the operator and determines whether any picture image is to be set and fitted in the displayed linework image.

When the answer is YES at step S430, the program goes to step S440 at which the CPU 11 specifies a location where a picture image is to be set in the linework image in response to operation of the mouse 24. The CPU 11 then reads picture data stored in the external memory disk 22 to specify the picture image to be placed at the predetermined location at step S450. In the example of Fig. 4A, a certain picture image is set and fitted in the frame of the seventh image part M7.

The program then goes to step S460 at which it is determined whether the trapping process is required according to an instruction of the operator The trapping process forms an overlaid area of a predetermined width on a boundary between two image parts so as to prevent an image omission caused by a registration error in preparation of color printing plates.

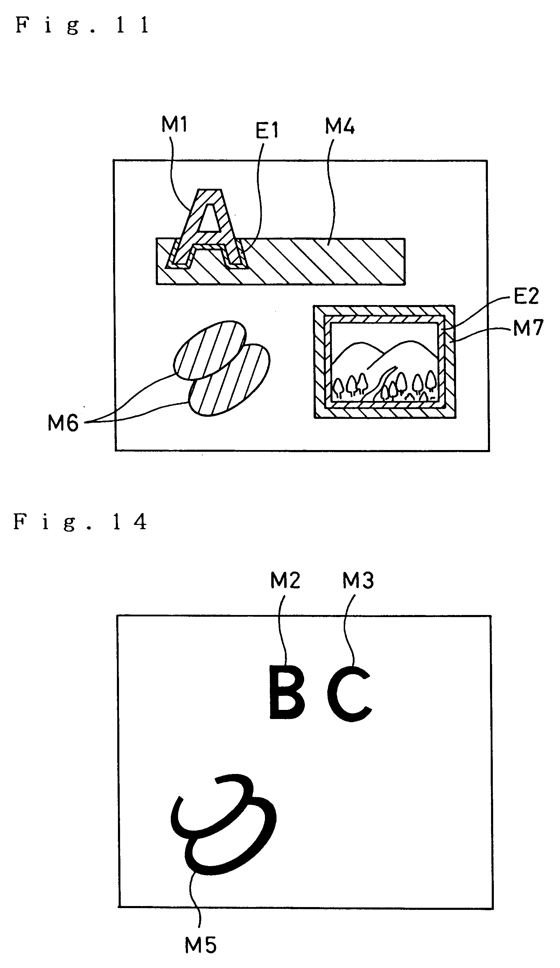

When the trapping process is required at step S460, the program goes to step S470 at which the CPU 11 determines a location of an overlaid area according to operation of the mouse 24, and to step S480 at which the CPU 11 specifies a certain color for filling the overlaid area. Fig. 10 shows an example of the trapping process executed for the linework data DLA of the mechanical M shown in Fig. 4A. A first overlaid area E1 of a predetermined width is defined by a plurality of points (shown by the open circles) specified by the operator and drawn on a boundary between the letter 'A' of the first image part M1 and the rectangle of the fourth image part M4 as clearly seen in Fig. 10. A certain color is then allocated to the overlaid area E1 at step S480. In the example of Fig. 4A, a second overlaid area E2 is formed on a boundary between the frame of the seventh image part M7 and the picture image set in the frame as shown in Fig. 11.

When the CPU 11 determines that no trapping process is required at step S460 or after the process of step S480 is concluded, the program proceeds to step S490 at which the CPU 11 terminates the page layout software, and then exits from the routine of Fig. 9 to complete the process at step S400 of Fig. 5.

Fig. 11 shows an image displayed on the CRT display 23 after execution of steps S300 and S400 as briefly described below:
(a) The letter 'A' of the first image part M1, the rectangle of the fourth image part M4, the closed area of the sixth image part M6, and the frame of the seventh image part M7 are traced;
(b) Certain colors are allocated to fill inside the image parts M1, M4, and M6 (shown by the hatches);
(c) A line width and a color are specified for the seventh image part M7 (shown by the hatches);
(d) A picture image is set and fitted in the seventh image part M7; and
(e) The first overlaid area E1 is formed on a boundary between the first image part M1 and the fourth image part M4 while the second overlaid area E2 is made on a boundary between the seventh image part M7 and the picture image set therein.

After execution of step S400 in the flowchart of Fig. 5, the program goes to step S500 at which the CPU 11 stores the image shown in Fig. 11 as layout data D1 in the external memory disk 22. The layout data D1 generally includes positions of image parts laid out in a certain page and color data thereof, as well as, names of the image parts and is expressed by a page description language (PDL) such as Postscript.

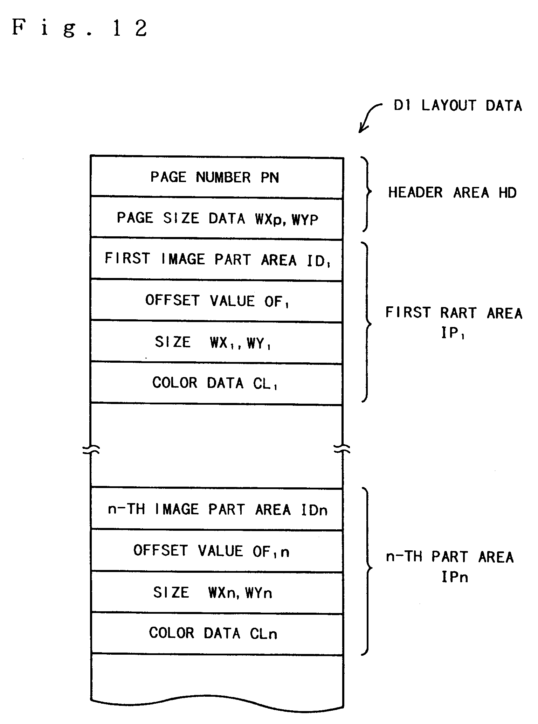

Fig. 12 shows a typical example of the layout data D1, which includes a header area HD and a plurality of image part areas IP1, IP2, ...., IPn (n: arbitrary integer) corresponding to a plurality of image parts laid out in a certain page. The header area HD includes a page number PN and page size data WXp and WYp defining the size of the certain page. Each image part area IPk (k=1, 2, ...., n) includes identification data IDk representing a name of each image part, an offset value OFk showing a masking position on the certain page, mask size data WXk, WYk, and color data CLk. The color data is expressed by the combination of the halftone dot area rates (Hy, Hm, Hc, Hk) where Hy, Hm, Hc, and Hk denote halftone dot area rates for yellow, magenta, cyan, and black, respectively.

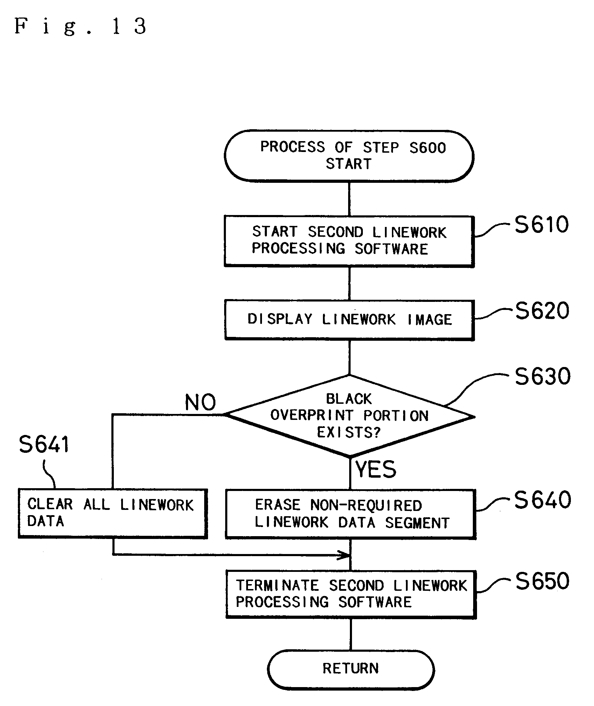

After execution of step S500, the program goes to step S600 at which the CPU 11 generates black overprint data D2 based on the linework data DLA of the mechanical M read at step S100. Fig. 13 is a flowchart showing details of the process executed at step S600 of Fig. 5.

The CPU 11 first starts a linework processing software at step S610. After showing a linework image corresponding to the linework data DLA on the CRT display 23 at step S620, the CPU 11 reads an instruction from the operator and determines whether the displayed linework image includes a black overprint area at step S630. The black overprint area has 100 dot percent in the K printing plate.

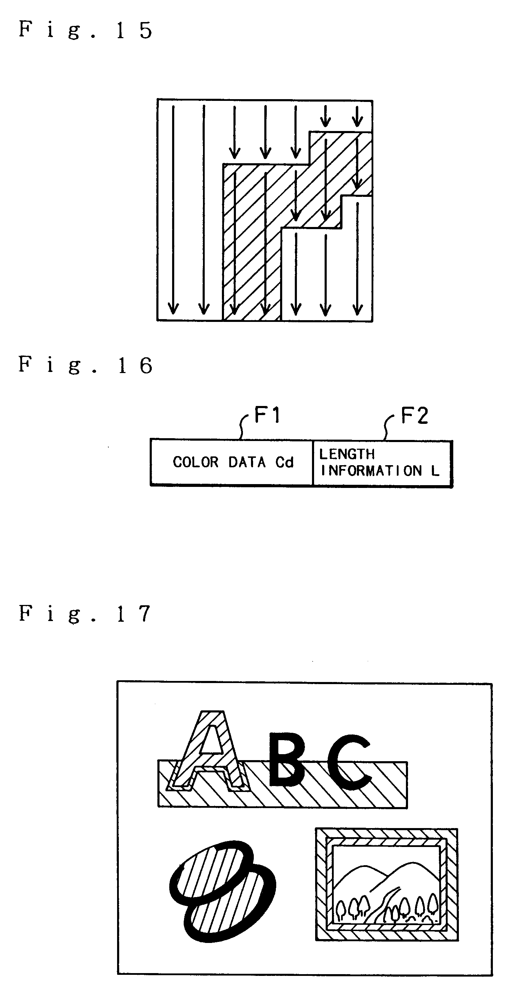

When the linework image includes a black overprint area at step S630, the program goes to step S640 at which the CPU 11 erases data corresponding to a non-required linework segment in the linework data DLA read at step S100 so as to show only a black overprint linework segment on the CRT display 23. This process is executed according to instructions from the operator with a noise elimination tool, a brushing tool, and a painting tool in the linework processing routine. When the mechanical M includes the first through seventh image parts M1 through M7 as shown in Fig. 3, the letter 'B' of the second image part M2, the letter 'C' of the third image part M3, and the illustration of the fifth image part M5 are kept on the CRT display 23 whereas the other image parts M1, M4, M6, and M7 are erased as shown in Fig. 14.

When the displayed linework image does not include any black overprint area at step S630, on the other hand, the program goes to step S641 at which all the linework data DLA are erased and cleared. After execution of step S640 or S641, the program goes to step S650 at which the CPU 11 terminates the linework processing software, and then exits from the routine of Fig. 13 to complete the process at step S600 of Fig. 5.

The black overprint data D2 generated through the linework processing routine consists of run length data as shown in Fig. 15. A sequence of pixel data having an identical value in a primary scanning direction represents one set of data as shown by an arrow in Fig. 15. In this example, an area filled with slant lines has the value '1' while the rest has the value '0'. Each set of run length data or record data includes a color number field F1 storing a color data Cd and a length data field F2 storing length data L showing a run length by a number of pixels as shown in Fig. 16. Since the black overprint data D2 represents a binary image, the color data Cd is equal to zero or one. All the Y, M, C, and K printing plates have zero dot percent for the color data Cd=0 whereas only the K printing plate has 100 dot percent for the color data Cd=1.

After execution of step S600 in the flowchart of Fig. 5, the program goes to step S700 at which the CPU 11 outputs the layout data D1 stored at step S500 and the black overprint data D2 generated at step S600 to the RIP 5 via the output unit 15. The RIP 5 expands the layout data D1 to raster data, combines the raster data with the black overprint data D2 to compose page image data D3, and outputs the page image data D3 to the recorder unit 7 as described previously. For example, the RIP 5 combines the image of Fig. 11 or Fig. 4B corresponding to the layout data D1 with the image of Fig. 14 or Fig. 4C corresponding to the black overprint data D2 to compose a resultant image shown in Fig. 17 or Fig. 4D, and the recorder unit 7 records the resultant image on a recording medium P.

As described above, in the reproduction image recording apparatus 1 of the embodiment, the front end processor 3 reads a mechanical M as linework data using the plane scanner 21 and displays an image corresponding to the linework data on the CRT display 23. The front end processor 3 then generates layout data D1 showing an image segment other than a black overprint area and black overprint data D2 representing the black overprint area. The RIP 5 expands the layout data D1 to raster data and combines the raster data with the black overprint data D2 to compose page image data D3. The recorder unit 7 records a resultant image corresponding to the page image data D3 on a recording medium P.

This structure of the embodiment allows simple and fast reproduction according to the mechanical M without any further layout processing. The reproduction image recording apparatus 1 generates a black overprint image area as binary linework data which does not require any tracing process, and a residual image area as layout data which requires expansion to bit map data or raster image processing (RIP). Since printing generally includes a relatively large area of black overprint areas, this structure effectively reduces the amount of layout data requiring RIP, thus improving the speed of the whole reproduction process.

The plane scanner 21 and the CRT display 23 in the embodiment respectively correspond to the linework data generator and the display of the invention. The outline generator is realized by the CPU 11 and the process of step S300 executed by the CPU 11. The layout generator is realized by the CPU 11 and the process of step S500 executed by the CPU 11. Also, the black area data generator is realized by the CPU 11 and the process of step S600 executed by the CPU 11. The OR gate 39 of the RIP 5 corresponds to the combined image data generator.

In the above embodiment, a black overprint area is generated as binary linework data to be combined with layout data in a subsequent process. A color overprint area having 100 dot percent for one of the Y, M, and C printing plates in place of the black overprint area may be generated as linework data. This also simplifies the reproduction process and improves the speed thereof. In such a case, the black overprint area instead of the colored area is processed at steps S340, S360, and S370 in the flowchart of Fig. 7. In the flowchart of Fig. 13, the CPU 11 determines whether a linework image includes a color overprint area at step S630 and erases a linework segment (including a black overprint area) other than the color overprint area at step S640.

Although the present invention has been described in relation to particular embodiments thereof, many other variations and modifications and other uses will become apparent to those skilled in the art. It is preferred, therefore, that the present invention be limited not by the specific disclosure herein, but only by the appended claims.

## Claims

1. A reproduction image recording apparatus, comprising: a linework data generator for scanning a monochrome image, which includes an outline of an image part and a black area, to generate first linework data representing said monochrome image; a display for displaying images; a display controller for controlling said display to display said monochrome image as a function of said first linework data; said apparatus characterized by comprising:
a black area data generator for extracting from said first linework data second linework data representing said black area;
an outline generator for determining a desirable outline of said image part corresponding to said outline of said monochrome image displayed on said display to generate outline data representing said desirable outline;
a layout generator for composing a page image having said image part defined by said desirable outline and generating layout data representing said page image; and
a combined image data generator for combining said layout data with said second linework data to produce combined image data representing a combined image including said black area and said image part.

2. A reproduction image recording apparatus in accordance with claim 1, wherein said outline generator further comprises:
a point specifier for specifying a plurality of points in the proximity of said outline displayed on said display; and
a point connector for connecting said plurality of points with one another to produce said desirable outline.

3. A reproduction image recording apparatus in accordance with claim 2, wherein said layout generator further comprises:
a color processor for allocating a predetermined color to said image part defined by said desirable outline.

4. A reproduction image recording apparatus in accordance with claim 3, wherein said layout generator further comprises a trapping processor for creating an overlapping area of a predetermined width on a boundary between two image parts each defined by said desirable outline, said overlapping area being used to prevent an image omission caused by a registration error in printing.

5. A reproduction image recording apparatus in accordance with claim 1, wherein said black area data generator further comprises a linework eliminator for erasing part of said first linework data representing a residual portion of said monochrome image other than said black area.

6. A reproduction image recording apparatus in accordance with claim 1, wherein said layout generator further comprises a page description program output for outputting said layout data as a page description program expressed by a page description language; and
said combined image data generator further comprises a layout data expander for converting said layout data to first bit map image data.

7. A reproduction image recording apparatus in accordance with claim 6, wherein said combined image data generator further comprises a black area data expander for converting said second linework data to second bit map image data.

8. A reproduction image recording apparatus in accordance with claim 7, wherein said combined image data generator further comprises a controller for, when said first bit map image data output from said layout data expander corresponds to a black printing plate, allowing said combined image data generator to combine said first bit map image data with said second bit map image data converted by said black area data expander and for preventing said combined image data generator from combining said first bit map image data with said second bit map image data when said first bit map image data corresponds to a printing plate other than said black printing plate.

9. A reproduction image recording apparatus in accordance with claim 1, said apparatus further comprising a work station including a central processor unit and software executed by said central processor unit, wherein said central processor unit and software comprises said layout generator and said black area data generator.

10. A reproduction image recording apparatus in accordance with claim 1, said apparatus further comprising a recorder for recording said combined image on a recording medium as a function of said combined image data.

11. A method of recording a reproduction image, comprising the steps of: (a) scanning a monochrome image, which includes an outline of an image part and a black area, to generate first linework data representing said monochrome image; (b) displaying said monochrome image as a function of said first linework data; said method characterized by comprising the steps of:
(c) extracting from said first linework data second linework data representing said black area;
(d) determining a desirable outline of said image part corresponding to said outline displayed in said step (b) to generate outline data representing said desirable outline;
(e) composing a page image having said image part defined by said desirable outline and generating layout data representing said page image; and
(f) combining said layout data with said second linework data to produce combined image data representing a combined image including said black area and said image part.

12. A method in accordance with claim 11, wherein said step (d) further comprises the steps of:
(d-1) determining a plurality of points in the proximity of said outline displayed in said step (b); and
(d-2) connecting said plurality of points with one another to produce said desirable outline.

13. A method in accordance with claim 12, wherein said step (e) further comprises the steps of:
(e-1) allocating a predetermined color to said image part defined by said desirable outline.

14. A method in accordance with claim 13, wherein said step (e) further comprises the step of:
(e-3) creating an overlapping area of a predetermined width on a boundary between two image parts each defined by said desirable line, said overlapping area being used to prevent an image omission caused by a registration error in printing.

15. A method in accordance with claim 11, wherein said step (c) further comprises the step of:
(c-1) erasing part of said first linework data representing a residual portion of said monochrome image other than said black area.

16. A method in accordance with claim 11, wherein said step (e) further comprises the step of:
(e-4) outputting said layout data as a page description program expressed by a page description language; and
said step (f) further comprises the step of:
(f-1) converting said layout data to first bit map image data.

17. A method in accordance with claim 16, wherein said step (f) further comprises the step of:
(f-2) converting said second linework data to second bit map image data.

18. A method in accordance with claim 17, wherein said step (f) further comprises the step of:
(f-3) allowing combination of said first bit map image data with said second bit map image data converted in said step (f-2) when said first bit map image data output in said step (f-1) corresponds to a black printing plate and interfering with said combination when said first bit map image data output in said step (f-1) corresponds to a printing plate other than said black printing plate.

19. A method in accordance with claim 11, said method further comprising the step of:
(g) recording said combined image on a recording medium as a function of said combined image data.
